# EUROPÄISCHE PATENTSCHRIFT

(11) **EP 3 613 550 B1**
(45) Veröffentlichungstag und Bekanntmachung des Hinweises auf die Patenterteilung: **09.06.2021**
(21) Anmeldenummer: 19203775.2
(22) Anmeldetag: 20.06.2016
(51) Int. Cl.: B29C 43/18, B29C 69/00, B29C 63/00, B29C 45/14, B29C 33/42, B29L 31/30

(54) **VERFAHREN UND VORRICHTUNG ZUM HERSTELLEN EINES KASCHIERTEN FORMTEILS**
METHOD AND DEVICE FOR PRODUCING A LAMINATED MOULDED PART
PROCÉDÉ ET DISPOSITIF DE FABRICATION D'UNE PIÈCE MOULÉE STRATIFIÉE

(30) Priorität: 29.07.2015 DE 102015112374
(43) Veröffentlichungstag der Anmeldung: 26.02.2020
(62) Teilanmeldung aus: 16731119.0
(73) Patentinhaber: International Automotive Components Group GmbH, 40472 Düsseldorf (DE)
(72) Erfinder: SCHWEINDL, Fritz, verstorben (DE)
(74) Vertreter: Kretschmann, Dennis

(56) Entgegenhaltungen:
- EP-A1- 0 543 085
- EP-A2- 0 730 947
- EP-A2- 2 457 706
- DE-A1- 19 826 498
- DE-A1-102012 020 554
- DE-A1-102012 110 161
- US-A- 4 385 955

## Beschreibung

### Gebiet der Erfindung

Die Erfindung bezieht sich auf ein Verfahren und eine Vorrichtung zum Herstellen eines kaschierten Formteils, insbesondere zum Herstellen eines kaschierten faservliesverstärkten Trägerbauteils zum Einsatz in der Innenausstattung von Kraftfahrzeugen.

### Hintergrund der Erfindung

Trägerelemente, insbesondere für die Innenausstattung von Kraftfahrzeugen, werden häufig unter Erwärmung in einem Pressformwerkzeug gepresst. In dem Pressformwerkzeug können optional auch Versteifungsrippen angespritzt werden. Das auf diese Weise hergestellte Formteil wird dann üblicherweise in einem nachfolgenden Herstellungsschritt an seiner Oberseite mit einem Dekorelement, beispielsweise einer Leder- oder Stoffbahn, kaschiert. Dazu wird das gepresste Formteil aus dem Formwerkzeug entnommen und einer separaten, räumlich getrennten Kaschieranlage zugeführt.

Der zweistufige Herstellungsprozess mit zeitlich aufeinanderfolgendem und räumlichen getrenntem Pressformen/Spritzgießen und Kaschieren führt zu qualitativ hochwertigen kaschierten Formteilen, ist jedoch zeitlich und apparativ aufwändig. Vereinzelt wurde deshalb auch mit Herstellungsverfahren experimentiert, bei welchen das Dekorelement bereits zusammen mit dem noch ungeformten Rohling für das Formteil in das Presswerkzeug eingebracht wird, um das Pressformen und das Kaschieren in einem Schritt zusammenzufassen. Durch den hohen Druck beim Pressformen wird das Dekorelement jedoch häufig geschädigt. Besondere Schwierigkeiten ergeben sich bei der Verwendung von Hybridwerkzeugen, welche zusätzlich zum Pressformen auch Versteifungsrippen anspritzen. Durch den hohen Einspritzdruck wird das Dekorelement zusammengedrückt, und es erfolgt ein Überspritzen der Versteifungsrippen auf das Dekorelement, sodass die Rippen unerwünschterweise auf dem Dekorelement sichtbar werden.

Aus der Offenlegungsschrift DE 198 26 498 A1 ist ein zweistufiges Verfahren zur Herstellung eines kaschierten Kunststoffformteils für die Innenausstattung von Kraftfahrzeugen bekannt. In einem ersten Schritt wird mittels eines Spritzguss-, Spritzpress- oder Pressverfahrens in einer Werkzeugform ein Kunststoffformteil ausgebildet. Anschließend wird eine Dekorschicht in das geöffnete Werkzeug eingelegt, wobei diese Dekorschicht auf der dem Kunststoffteil zugewandten Seite mit einem Kleber benetzt ist. Das Werkzeug wird anschließend ohne weiteres zusätzliches Aufheizen geschlossen, wobei die Dekorschicht am Kunststoffformteil anliegt. Nach dem Abkühlen wird das Werkzeug geöffnet und das kaschierte Kunststoffformteil aus dem Werkzeug entnommen.

Ein Verfahren zum Herstellen eines Dekorteils für einen Kraftfahrzeuginnenraum in einem Presswerkzeug, bei welchem zwischen dem Ausbilden der Dekorschicht und dem Einführen eines Faserverbundwerkstoffs eine Formhälfte des Formpresswerkzeugs gewechselt wird, ist aus der Offenlegungsschrift DE 10 2012 110 161 A1 bekannt.

Es besteht daher Bedarf nach einem verbesserten Verfahren bzw. einer verbesserten Vorrichtung, mit welchen sich ein kaschiertes Formteil schnell, effizient und in hoher Qualität herstellen lässt.

### Übersicht über die Erfindung

Diese Aufgabe wird durch ein Verfahren bzw. eine Vorrichtung zum Herstellen eines kaschierten Formteils mit den Merkmalen der unabhängigen Ansprüche 1 und 9 gelöst. Die abhängigen Ansprüche beziehen sich auf vorteilhafte Weiterbildungen.

Ein erfindungsgemäßes Verfahren zum Herstellen eines kaschierten Formteils umfasst das Pressformen eines Rohlings zu einem Formteil in einem Formraum zwischen einer ersten Formwerkzeugeinheit und einer zweiten Formwerkzeugeinheit, das Einführen eines Kaschierelements in den Formraum nach dem Pressformen des Rohlings und das Verbinden des Formteiles mit dem Kaschierelement in dem Formraum.

Erfindungsgemäß kann also das Kaschieren des Formteils in einem getrennten Prozessschritt nach dem Pressformen erfolgen, aber in demselben Formraum bzw. Werkzeug. Dadurch ergeben sich mehrere Vorteile: Die Verarbeitungsgeschwindigkeit steigt, da die Schritte des Entfernens des pressgeformten Formteils aus dem Pressformwerkzeug, des Transports an eine separate Kaschieranlage und des Einspannens in die Kaschieranlage entfallen. Gleichzeitig sinken auch der apparative Aufwand und der Raumbedarf in der Fertigung, da auf eine separate Kaschieranlage verzichtet werden kann. Das Herstellungsverfahren wird dadurch insgesamt schneller und effizienter. Zudem lässt sich die Restwärme im Pressformwerkzeug für den nachfolgenden Kaschierprozess nutzbar machen.

In einer Pressformwerkzeugeinrichtung kann der Rohling, beispielsweise ein thermoplastisch gebundenes Faservlies, in einen Formraum zwischen der ersten Formwerkzeugeinheit und der zweiten Formwerkzeugeinheit eingebracht werden. Der Formraum kann im Rahmen der Erfindung als Raum zum Aufnehmen des Rohlings und zum Pressformen des Rohlings zu einem Formteil verstanden werden. Insbesondere kann der Formraum ein Raum zwischen der ersten Formwerkzeugeinheit und der zweiten Formwerkzeugeinheit sein oder diesen Raum umfassen.

Die erste Formwerkzeugeinheit und die zweite Formwerkzeugeinheit können relativ zueinander im Formraum verschiebbar oder beweglich sein. Dabei kann die erste Formwerkzeugeinheit beweglich ausgebildet und die zweite Formwerkzeugeinheit raumfest ausgebildet sein oder umgekehrt. Ebenso können auch sowohl die erste Formwerkzeugeinheit als auch die zweite Formwerkzeugeinheit beweglich ausgebildet sein und beim Pressformen gegeneinander bewegt werden.

Eine Form und/oder eine Struktur einer ersten Oberfläche der ersten Formwerkzeugeinheit und/oder eine Form bzw. eine Struktur einer zweiten Oberfläche der zweiten Formwerkzeugeinheit sind an die Form bzw. die Struktur des herzustellenden Formteils angepasst und prägen dem Rohling beim Pressformen die entsprechende Struktur auf. Die zweite Oberfläche der zweiten Formwerkzeugeinheit liegt dabei vorzugsweise der ersten Oberfläche der ersten Formwerkzeugeinheit gegenüber. Zwischen der ersten Oberfläche der ersten Formwerkzeugeinheit und der zweiten Oberfläche der zweiten Formwerkzeugeinheit kann auf diese Weise ein Werkzeugspalt ausgebildet werden, welcher durch eine Relativbewegung der ersten Formwerkzeugeinheit gegenüber der zweiten Formwerkzeugeinheit beim Pressformen auf ein vorgegebenes Spaltmaß reduziert wird, sodass der dazwischenliegende Rohling zu dem Formteil mit der gewünschten Oberflächenform und/oder Oberflächenstruktur gepresst wird.

Im Unterschied zum Stand der Technik wird das Formteil nach dem Pressformen zum Kaschieren nicht notwendigerweise aus der Pressformwerkzeugeinrichtung bzw. dem Formraum entnommen. Vielmehr kann erfindungsgemäß das Formteil zwischen dem Pressformen und dem Einführen des Kaschierelements bzw. zwischen dem Pressformen und dem Verbinden des Formteils mit dem Kaschierelement in dem Formraum verbleiben. Insbesondere kann das Formteil nach dem Pressformen an der ersten Formwerkzeugeinheit anliegend oder anhaftend in dem Formraum verbleiben. Dadurch entfällt das zeitaufwändige Entfernen des pressgeformten Rohlings aus der Pressformwerkzeugeinrichtung und der Transport zu einer separaten Kaschieranlage.

Erfindungsgemäß umfasst das Verbinden des Formteils mit dem Kaschierelement ein Presskaschieren des Formteils mit dem Kaschierelement in dem Formraum. Auf diese Weise lässt sich die vorhandene Pressformwerkzeugeinrichtung auch als Kaschieranlage nutzen.

Erfindungsgemäß wird für das nachfolgende Presskaschieren eine speziell angepasste Formwerkzeugeinheit eingesetzt. Beispielsweise kann das pressgeformte Formteil nach dem Pressformen an der ersten Formwerkzeugeinheit anliegend in dem Formraum verbleiben, während die zweite Formwerkzeugeinheit gegen eine dritte Formwerkzeugeinheit zum Presskaschieren ausgetauscht wird.

Eine Form und/oder eine Oberflächenstruktur des dritten Formwerkzeugs können an das Kaschierelement angepasst sein. Diese Ausführungsformen sind insbesondere vorteilhaft für Formteile mit einer ausgeprägten dreidimensionalen Oberflächenstruktur.

Das Verbinden des Formteils mit dem Kaschierelement umfasst also ein Presskaschieren des Formteils mit dem Kaschierelement zwischen der ersten Formwerkzeugeinheit und einer dritten Formwerkzeugeinheit, welche von der zweiten Formwerkzeugeinheit verschieden ist. In einer Weiterbildung kann das Verfahren ein Entfernen der zweiten Formwerkzeugeinheit aus dem Formraum nach dem Pressformen umfassen.

Das Verfahren kann auch einen Schritt eines Einführens der dritten Formwerkzeugeinheit in den Formraum nach dem Pressformen und vor dem Presskaschieren umfassen, sodass die dritte Formwerkzeugeinheit der ersten Formwerkzeugeinheit gegenüberliegt.

Insbesondere können eine Form und/oder eine Struktur des kaschierten Formteils durch eine Form bzw. eine Struktur einer dritten Oberfläche der dritten Formwerkzeugeinheit definiert werden, wobei die dritte Oberfläche der dritten Formwerkzeugeinheit vorzugsweise der ersten Oberfläche der ersten Formwerkzeugeinheit gegenüberliegt.

In einer Weiterbildung kann das Kaschierelement vor dem Presskaschieren an der dritten Formwerkzeugeinheit in den Formraum eingeführt werden. Die dritte Formwerkzeugeinheit kann auf diese Weise gleichzeitig als Transportelement für das Kaschierelement dienen. Daher wird ein separates Transportelement zum Einführen des Kaschierelements entbehrlich. Die Verfahrenseffizienz wird dadurch zusätzlich gesteigert.

Das erfindungsgemäße Verfahren kann vorzugsweise einen Schritt eines Anlegens des Kaschierelements an die zweite bzw. dritte Formwerkzeugeinheit vor dem Verbinden des Formteils mit dem Kaschierelement umfassen. Das Anlegen kann sowohl zum Transport des Kaschierelements als auch zum Positionieren des Kaschierelements vor dem Verbinden des Formteils mit dem Kaschierelement vorteilhaft sein.

Insbesondere kann das Verfahren einen Schritt eines Ansaugens des Kaschierelements an die zweite bzw. dritte Formwerkzeugeinheit umfassen. Durch ein Ansaugen lässt sich ein Kaschierelement, beispielsweise eine Kaschierfolie, zuverlässig transportieren sowie schnell und genau positionieren.

In einer bevorzugten Ausführung ist der Rohling ein vorgewärmter Rohling. Insbesondere kann das erfindungsgemäße Verfahren einen Schritt eines Vorwärmens des Rohlings umfassen.

Ein vorgewärmter Rohling lässt sich besser pressformen und weist nach dem Erkalten eine höhere Formstabilität auf.

Die Restwärme des Rohlings bzw. der ersten Formwerkzeugeinheit und der zweiten Formwerkzeugeinheit in dem Formraum lässt sich erfindungsgemäß auch für das nachfolgende Verbinden des Formteils mit dem Kaschierelement nutzbar machen. Auch das Kaschieren erfolgt nämlich vorzugsweise unter Wärmeeintrag. Beispielsweise kann das Kaschierelement an einer Unterseite ein Klebemittel zur Verbindung mit dem Formteil umfassen. Diese Klebemittel kann durch Wärmeeintrag aktiviert werden.

Indem das Verbinden des Formteils mit dem Kaschierelement in dem durch das Pressformen vorgewärmten Formraum erfolgt, lässt sich die Restwärme auch für das nachfolgende Kaschieren nutzen. Die Energieeffizienz des Herstellungsverfahrens wird dadurch gesteigert.

Auf ein separates Erwärmen des Kaschierelements vor dem Verbinden des Formteils mit dem Kaschierelement kann deshalb in einigen Ausführungsformen verzichtet werden.

In anderen Ausführungsformen kann ein zusätzliches Erwärmen des Kaschierelements vor dem Verbinden des Formteils mit dem Kaschierelement zur Unterstützung des Kaschierprozesses nützlich sein. In diesem Fall ist jedoch aufgrund der Restwärme in dem Formraum der notwendige Wärmeeintrag zur Erwärmung des Kaschierelements reduziert.

Das erfindungsgemäße Verfahren kann auch einen Schritt eines Einführens des Rohlings in den Formraum umfassen.

In einer bevorzugten Ausführungsform umfasst das Verfahren einen Schritt eines Anspritzens von Verstärkungselementen bzw. Versteifungselementen an das Formteil in dem Formraum.

Das Anspritzen von Verstärkungselementen kann in einem Hybridprozess gleichzeitig zum Pressformen des Rohlings zu dem Formteil erfolgen. Dadurch wird die Prozesseffizienz zusätzlich gesteigert.

Als Formteil im Sinne der Erfindung können beliebige Strukturelemente verstanden werden, die sich aus einem Rohling durch Pressformen ausbilden lassen. Das Formteil kann insbesondere ein Trägerformteil sein.

Als Rohling im Sinne der Erfindung kann jedes Ausgangsmaterial für das Pressformen verstanden werden.

In bevorzugten Ausführungsformen umfasst der Rohling ein thermoplastisch gebundenes Faservlies. Das Faservlies kann Naturfasern, Glasfasern, PET-Fasern, Kohlefasern und/oder Baumwollfasern umfassen.

Als Kaschierelement im Sinne der Erfindung kann jedes Element, mit welchem sich ein Formteil in einem Kaschierprozess verbinden lässt, verstanden werden.

Das Kaschierelement kann ein Dekorelement und/oder ein Folie, insbesondere eine Dekorfolie, umfassen. Dekorfolien können insbesondere PVC, Polyolefin (TPO), PU, PC und/oder PMMA mit oder ohne Schaum oder Vlieskaschierungen umfassen. Die Dekorelemente können insbesondere Leder, Alcantara, Kunstleder, Vliese oder Teppichwaren umfassen.

Das Verbinden des Formteils mit dem Kaschierelement kann ein Klebeverbinden umfassen. Zum Unterstützen des Verbindens des Formteils mit dem Kaschierelement können insbesondere reaktive oder thermoplastische Klebstoffsysteme eingesetzt werden.

Die Erfindung bezieht sich auch auf ein Steuerungsprogramm mit rechnerlesbaren Instruktionen, welche dazu eingerichtet sind, beim Abarbeiten der rechnerlesbaren Instruktionen in einer Rechnervorrichtung ein Verfahren mit einem oder allen der vorgenannten Merkmale auszuführen.

Die Erfindung bezieht sich ebenso auf ein rechnerlesbares Speichermedium mit rechnerlesbaren Instruktionen, welche dazu eingerichtet sind, bei einem Abarbeiten der rechnerlesbaren Instruktionen in einer Rechnervorrichtung ein Verfahren mit einem oder allen der vorgenannten Merkmale auszuführen.

Die Erfindung bezieht sich auch auf eine Vorrichtung zum Herstellen eines kaschierten Formteils mit einer Pressformwerkzeugeinrichtung, welche eine erste Formwerkzeugeinheit und eine zweite Formwerkzeugeinheit und einen Formraum umfasst, wobei die erste Formwerkzeugeinheit und die zweite Formwerkzeugeinheit zum Pressformen eines Rohlings zu einem Formteil relativ zueinander in dem Formraum verschiebbar sind. Die erfindungsgemäße Vorrichtung umfasst ferner eine erste Einführeinrichtung zum Einführen eines Kaschierelements in den Formraum nach dem Pressformen des Formteils. Die Vorrichtung ist erfindungsgemäß dazu eingerichtet, das Formteil mit dem Kaschierelement in dem Formraum zu verbinden.

Insbesondere kann die Vorrichtung dazu eingerichtet sein, das Formteil zwischen dem Pressformen und dem Einführen des Kaschierelements bzw. zwischen dem Pressformen und dem Verbinden des Formteils mit dem Kaschierelement in dem Formraum zu belassen, vorzugsweise an der ersten Formwerkzeugeinheit anliegend oder anheftend in dem Formraum zu belassen.

Vorzugsweise ist die Pressformwerkzeugeinrichtung dazu eingerichtet, das Formteil mit dem Kaschierelement in dem Formraum presszukaschieren.

In einer Ausführungsform ist die Pressformwerkzeugeinrichtung dazu eingerichtet, das Formteil mit dem Kaschierelement in dem Formraum zwischen der ersten Formwerkzeugeinheit und der zweiten Formwerkzeugeinheit presszukaschieren.

In einer erfindungsgemäßen Weiterbildung ist die Pressformwerkzeugeinrichtung dazu eingerichtet, ein Spaltmaß zwischen der ersten Formwerkzeugeinheit und der zweiten Formwerkzeugeinheit einzustellen, insbesondere das Spaltmaß größer einzustellen als ein entsprechendes Spaltmaß beim Pressformen des Rohlings.

Die Pressformwerkzeugeinrichtung kann auch eine dritte Formwerkzeugeinheit umfassen, wobei die dritte Formwerkzeugeinheit und die erste Formwerkzeugeinheit relativ zueinander in dem Formraum verschiebbar sind, wobei die Pressformwerkzeugeinrichtung dazu eingerichtet ist, das Formteil mit dem Kaschierelement in dem Formraum zwischen der ersten Formwerkzeugeinheit und der dritten Formwerkzeugeinheit presszukaschieren.

Die Pressformwerkzeugeinrichtung kann dazu eingerichtet sein, die zweite Formwerkzeugeinheit aus dem Formraum zu entfernen und/oder die dritte Formwerkzeugeinheit in den Formraum einzuführen.

Insbesondere kann die Pressformwerkzeugeinrichtung dazu eingerichtet sein, die dritte Formwerkzeugeinheit gegenüberliegend der ersten Formwerkzeugeinheit in dem Formraum zu positionieren.

Vorzugsweise kann die zweite Formwerkzeugeinheit bzw. die dritte Formwerkzeugeinheit dazu eingerichtet sein, das Kaschierelement vor dem Verbinden des Formteils mit dem Kaschierelement an die zweite bzw. dritte Formwerkzeugeinheit anzulegen, insbesondere tiefzuziehen und vorzugsweise anzusaugen.

Die zweite bzw. dritte Formwerkzeugeinheit kann dazu mit einer Ansaugvorrichtung ausgebildet sein.

In einer Ausführungsform umfasst die Vorrichtung auch eine zweite Einführeinrichtung zum Einführen des Rohlings in den Formraum.

Vorzugsweise umfasst die Vorrichtung eine Heizeinrichtung zum Erwärmen des Rohlings und/oder zum Erwärmen des Kaschierelements vor dem Verbinden des Formteils mit dem Kaschierelement.

Die Pressformwerkzeugeinrichtung kann dazu eingerichtet sein, an das Formteil in dem Formraum Verstärkungselemente anzuspritzen.

### Beschreibung bevorzugter Ausführungsformen

Die Vorteile des erfindungsgemäßen Verfahrens und der erfindungsgemäßen Vorrichtung lassen sich am besten anhand der nachfolgenden detaillierten Beschreibung von Ausführungsformen unter Bezugnahme auf die Zeichnungen verstehen, in denen:
- Fig. 1a bis 1c: schematisch die Prozessschritte eines Verfahrens zum Herstellen eines kaschierten Formteils gemäß einer ersten Ausführungsform der Erfindung veranschaulichen;
- Fig. 2a bis 2c: schematisch die Prozessschritte eines Verfahrens zum Herstellen eines kaschierten Formteils gemäß einer zweiten Ausführungsform der Erfindung veranschaulichen;
- Fig. 3a bis 3c: schematisch die Prozessschritte eines Verfahrens zum Herstellen eines kaschierten Formteils gemäß einer dritten Ausführungsform der Erfindung veranschaulichen; und
- Fig. 4: schematisch eine Vorrichtung zum Herstellen eines kaschierten Formteils gemäß einer Ausführungsform der Erfindung zeigt.

Die Erfindung wird im Folgenden anhand von Ausführungsbeispielen, welche sich auf die Herstellung faservliesverstärkter Trägerbauteile für die Kfz-Innenausstattung beziehen, erläutert. Die Erfindung ist jedoch nicht auf diese Anwendungen beschränkt, sondern allgemein anwendbar auf Verfahren zum Herstellen eines kaschierten Formteils mit einem Schritt des Pressformens eines Rohlings zu einem Formteil und einem nachfolgenden Schritt des Verbindens des Formteils mit einem Kaschierelement, beispielsweise unter Verwendung eines Klebemittels.

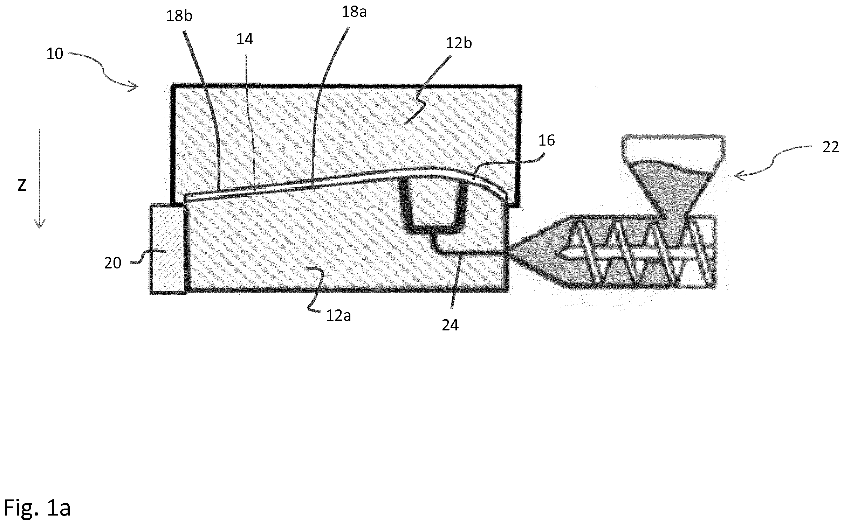

Die Figuren 1a bis 1c veranschaulichen schematisch Prozessschritte eines Verfahrens zum Herstellen eines kaschierten Formteils gemäß einer ersten Ausführungsform der Erfindung.

Fig. 1a zeigt in einer schematischen Seitendarstellung eine Pressformwerkzeugeinrichtung 10, welche eine erste Formwerkzeugeinheit 12a und eine zweite Formwerkzeugeinheit 12b umfasst. Die erste Formwerkzeugeinheit 12a ist in der Darstellung der Fig. 1a als raumfestes Unterwerkzeug ausgebildet. Die zweite Formwerkzeugeinheit 12b ist als Oberwerkzeug ausgebildet und entlang der Richtung z gegenüber der ersten Formwerkzeugeinheit 12a beweglich bzw. verschiebbar gelagert. Diese Ausführungsform ist jedoch rein beispielhaft. In anderen Ausführungsformen kann die zweite Formwerkzeugeinheit 12b raumfest und die erste Formwerkzeugeinheit 12a beweglich gelagert sein. Ebenso können sowohl die erste Formwerkzeugeinheit 12a als auch die zweite Formwerkzeugeinheit 12b zueinander beweglich/verschiebbar gelagert sein.

Die Pressformwerkzeugeinrichtung 10 umfasst auch einen Formraum 14, welcher einen Rohling zum Pressformen aufnimmt und in welchem der Rohling zwischen der ersten Formwerkzeugeinheit 12a und der zweiten Formwerkzeugeinheit 12b zu einem Formteil 16 gepresst wird. Der Formraum 14 ist als Werkzeugspalt mit variablem Spaltmaß zwischen einer oberen ersten Oberfläche 18a der ersten Formwerkzeugeinheit 12a und einer unteren zweiten Oberfläche 18b der zweiten Formwerkzeugeinheit 12b ausgebildet. Die erste Oberfläche 18a der ersten Formwerkzeugeinheit 12a und die zweite Oberfläche 18b der zweiten Formwerkzeugeinheit 12b sind in Form und Struktur aufeinander abgestimmt, insbesondere einander komplementär, und bestimmen die Form und Oberflächenstruktur des gepressten Formteils 16.

Zum Pressformen wird ein Rohling, beispielsweise eine thermoplastisch gebundener Faservliesmatte, mittels einer Einführvorrichtung (in Fig. 1a nicht gezeigt) in den Formraum 14 eingeführt. Der Rohling kann vor dem Einführen in den Formraum 14 in einer Heizvorrichtung (nicht gezeigt) vorgeheizt werden, um das Pressformen zu erleichtern und eine beständige Formgebung zu ermöglichen. Nach dem Einführen des Rohlings wird die zweite Formwerkzeugeinheit 12b entlang der Richtung z gegen die erste Formwerkzeugeinheit 12a unter Druck abgesenkt. Die Endposition nach dem Absenken ist in Fig. 1a gezeigt und wird durch ein verstellbares Anschlagelement 20 bestimmt, welches mit der ersten Formwerkzeugeinheit verstellbar verbunden ist und auf welchem die zweite Formwerkzeugeinheit 12b nach dem vollständigen Absenken aufliegt. In dieser Werkzeugposition ist der Rohling zwischen der ersten Formwerkzeugeinheit 12a und der zweiten Formwerkzeugeinheit 12b eingepresst und wird durch Kontakt mit der ersten Oberfläche 18a der ersten Formwerkzeugeinheit 12a und der zweiten Oberfläche 18b der zweiten Formwerkzeugeinheit 12b zu dem Formteil 16 geformt.

Während des Pressformens kann in der Pressformwerkzeugeinrichtung 10 auch ein Hinterspritzen von Teilen des Formteils 16 zur Ausbildung einer Verstärkungsstruktur, beispielsweise einer Rippenstruktur, auf der Rückseite des Formteils 16 erfolgen. Die Pressformwerkzeugeinrichtung 10 umfasst dazu eine Spritzgusseinheit 22, welche über in der ersten Formwerkzeugeinheit 12a ausgebildete Spritzgusskanäle 24 ein verflüssigtes Kunststoffmittel unter hohem Druck gezielt auf vorbestimmte Bereiche der Rückseite des Formteils 16 aufbringt, während das Werkzeug zum Pressformen geschlossen ist.

Alternativ oder zusätzlich kann in oder nach diesem Prozessschritt auch ein Beschneiden des Formteils 16 erfolgen.

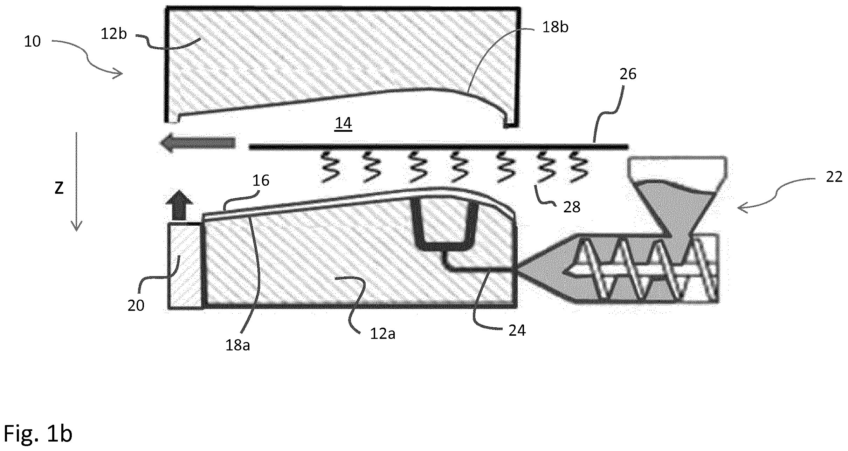

Anschließend wird das Formwerkzeug geöffnet und das Formteil 16 freigegeben, indem die zweite Formwerkzeugeinheit 12b entlang der Richtung -z zurückgefahren wird. Der geöffnete Zustand der Pressformwerkzeugeinrichtung 10 ist in Fig. 1b gezeigt.

Das Formteil 16 liegt nach dem Öffnen der Pressformwerkzeugeinrichtung 10 auf der ersten Oberfläche 18a der ersten Formwerkzeugeinheit 12a auf oder haftet an der ersten Oberfläche 18a an. Mittels einer Einführeinrichtung (nicht gezeigt) wird nun ein Kaschierelement 26, beispielsweise eine Lederfolienbahn oder eine Stofffolienbahn, in den Formraum 14 zwischen der ersten Formwerkzeugeinheit 12a und der zweiten Formwerkzeugeinheit 12b eingeführt (in Fig. 1b durch einen Pfeil veranschaulicht). Das Kaschierelement 26 ist an seiner dem Formteil 16 zugewandten Rückseite mit einem Klebemittel 28, beispielsweise einem reaktiven oder thermoplastischen Klebstoffsystem, beschichtet.

Nach dem Einführen des Kaschierelements 26 in den Formraum 14 wird die zweite Formwerkzeugeinheit 12b entlang der Richtung z erneut abgesenkt, bis die zweite Formwerkzeugeinheit 12b mit der zweiten Oberfläche 18b das Kaschierelement 26 gegen die Oberseite des Formteils 16 presst. Die Endposition kann durch Variieren des verstellbaren Anschlagelements 20 eingestellt werden. Beispielsweise kann das bewegliche Anschlagelement 20 entlang der Richtung -z bewegt werden, um den Werkzeugspalt 14 zwischen der ersten Formwerkzeugeinheit 12a und der zweiten Formwerkzeugeinheit 12b gegenüber dem Pressformen der Fig. 1a zu vergrößern. Auf diese Weise kann der Werkzeugspalt 14 an eine Materialstärke des für das Presskaschieren zusätzlich eingebrachten Kaschierelements 26 angepasst werden. Auch der Anpressdruck kann gegebenenfalls variiert werden.

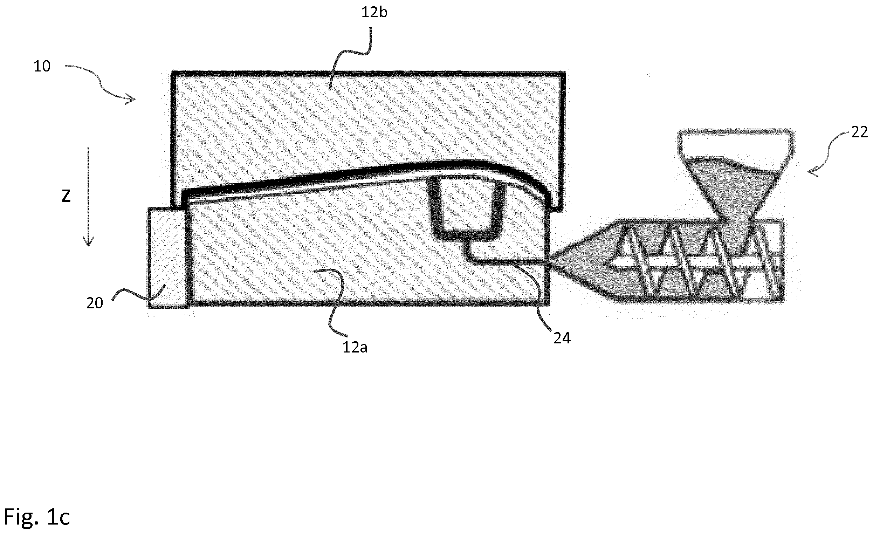

Der geschlossene Zustand der Pressformwerkzeugeinrichtung ist schematisch in Fig. 1c gezeigt. In dieser Konfiguration erfolgt eine Presskaschierung des Formteils 16 mit dem Kaschierelement 26. In diesem Schritt können das Formteil 16 und das Kaschierelement 26 auch zusätzlich beschnitten werden.

Nach dem erneuten Öffnen der Pressformwerkzeugeinrichtung 10 kann das kaschierte Formteil aus dem Formraum 14 entnommen werden.

Ein Vorteil der vorangehend beschriebenen Ausführungsform gegenüber konventionellen Verfahren zum Herstellen eines kaschierten Formteils liegt darin, dass das Pressformen des Rohlings zu einem Formteil 16 und das Kaschieren des Formteils 16 mit dem Kaschierelement 26 in derselben Pressformwerkzeugeinrichtung 10 und in demselben Formraum 14 erfolgen. Insbesondere verbleibt das pressgeformte Formteil 16 nach dem Pressformen an der ersten Formwerkzeugeinheit anliegend in dem Formraum 14. Ein Entfernen des pressgeformten Formteils 16 aus der Pressformwerkzeugeinrichtung 10 vor dem Kaschierschritt und ein Transportieren der Pressform 16 zu einer separaten Kaschiereinrichtung werden entbehrlich. Dadurch wird die Prozesseffizienz erhöht. Gleichzeitig sinkt der Raumbedarf, weil auf eine separate Kaschiereinrichtung verzichtet werden kann.

Ein weiterer Vorteil ergibt sich durch die Nutzung der Restwärme des Pressformens für das nachfolgende Presskaschieren. Für das Pressformen wird der Rohling, beispielsweise ein thermoplastisch gebundenes Faservlies, gewöhnlich auf Temperaturen von über 200 °C erwärmt. Nach dem Pressformen ist das im Formraum 14 verbleibende Formteil 16 noch deutlich erwärmt. Es kann je nach Ausführungsform und Dauer des Pressvorgangs nach dem Pressformen noch Temperaturen von höher als 100 °C aufweisen. Diese Restwärme lässt sich zur Aktivierung des Klebemittels 28 im nachfolgenden Kaschierprozess nutzbar machen. Daher kann gegenüber konventionellen Herstellungsverfahren mit einem räumlich getrennten Kaschierprozess auf ein Erwärmen des Kaschierelements 26 vor dem Kaschieren vollständig oder zumindest weitgehend verzichtet werden.

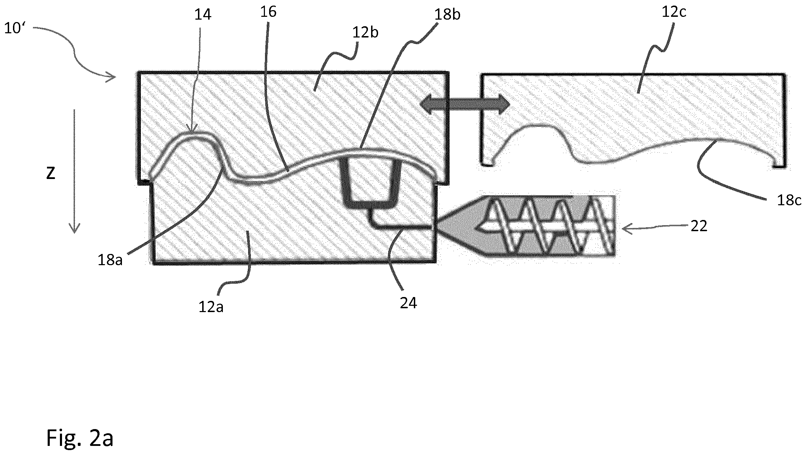

In der Ausführungsform der Figuren 1a bis 1c erfolgt das Presskaschieren mit denselben Formwerkzeugeinheiten 12a und 12b wie das vorangehende Pressformen. Die Figuren 2a bis 2c zeigen demgegenüber eine alternative Ausführungsform, bei welcher die zweite Formwerkzeugeinheit 12b für das Presskaschieren gegen eine dritte Formwerkzeugeinheit 12c ausgetauscht wird.

Der Aufbau der Pressformwerkzeugeinrichtung 10' der Figuren 2a bis 2c entspricht weitgehend der Pressformwerkzeugeinrichtung 10 der ersten Ausführungsform. Insbesondere erfolgt das in Fig. 2a gezeigte Pressformen des Rohlings zu einem Formteil 16 wie unter Bezugnahme auf Fig. 1a vorangehend für die erste Ausführungsform beschrieben zwischen der ersten Formwerkzeugeinheit 12a und der zweiten Formwerkzeugeinheit 12b.

Im Anschluss an das Öffnen der Pressformwerkzeugeinrichtung 10' verbleibt das Formteil 16 an der ersten Oberfläche 18a der ersten Formwerkzeugeinheit 12a anliegend in dem Formraum 14. Wie vorangehend unter Bezugnahme auf Fig. 1b beschrieben, wird nachfolgend das Kaschierelement 26 in den Formraum 14 eingebracht.

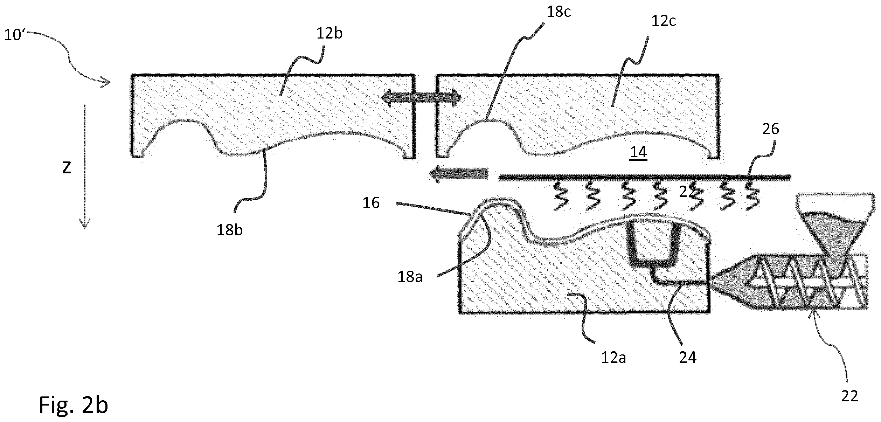

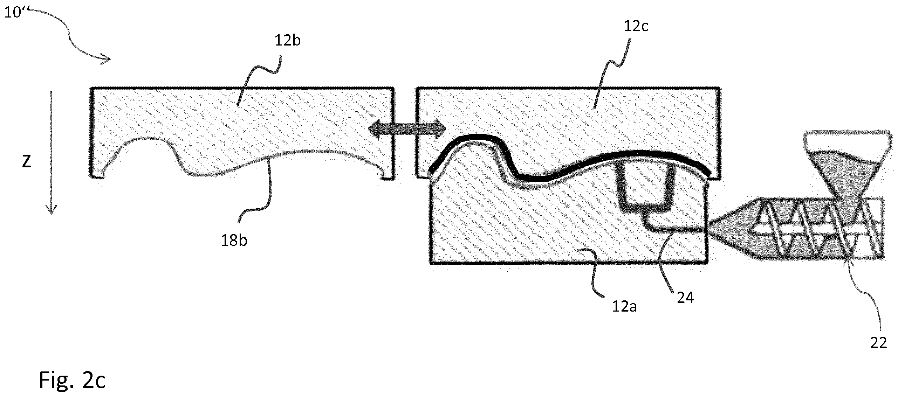

Wie in Fig. 2b gezeigt ist, wird im Gegensatz zur ersten Ausführungsform jedoch die zweite Formwerkzeugeinheit 12b aus dem Formraum 14 entfernt und statt ihrer eine dritte Formwerkzeugeinheit 12c der ersten Formwerkzeugeinheit 12a gegenüberliegend im Formraum 14 positioniert. Der Austausch der zweiten Formwerkzeugeinheit 12b gegen die dritte Formwerkzeugeinheit 12c kann unter Verwendung einer Formwerkzeugwechseleinrichtung (nicht gezeigt) erfolgen. Die dritte Formwerkzeugeinheit 12c umfasst an ihrer Unterseite eine dritte Oberfläche 18c, mit welcher es das Kaschierelement 26 beim nachfolgenden Absenken gegen das Formteil 16 presst. Dadurch wird das Formteil 16 an seiner Oberseite mit dem Kaschierelement 26 presskaschiert, wie in Fig. 2c gezeigt ist.

Die dritte Oberfläche 18c der dritten Formwerkzeugeinheit 12c kann in Form und Struktur grundsätzlich ähnlich wie die zweite Oberfläche 18b der zweiten Formwerkzeugeinheit 12b ausgestaltet sein, jedoch um eine Dicke des Kaschierelements 26 zurückgesetzt sein. Diese Ausführungsform ist insbesondere vorteilhaft für das Herstellen von Formelementen mit ausgeprägter Oberflächenstruktur in z-Richtung.

Zusätzlich kann die dritte Oberfläche 18c der dritten Formwerkzeugeinheit 12c Strukturelemente zur Strukturierung der Oberfläche des Kaschierelements 26 beim Presskaschieren aufweisen, beispielsweise abgeformte Oberflächenabschnitte oder vorstehende Einsätze. Auf diese Weise kann dem Kaschierelement 26 während des Presskaschierens zusätzlich eine Oberflächenstruktur aufgeprägt werden.

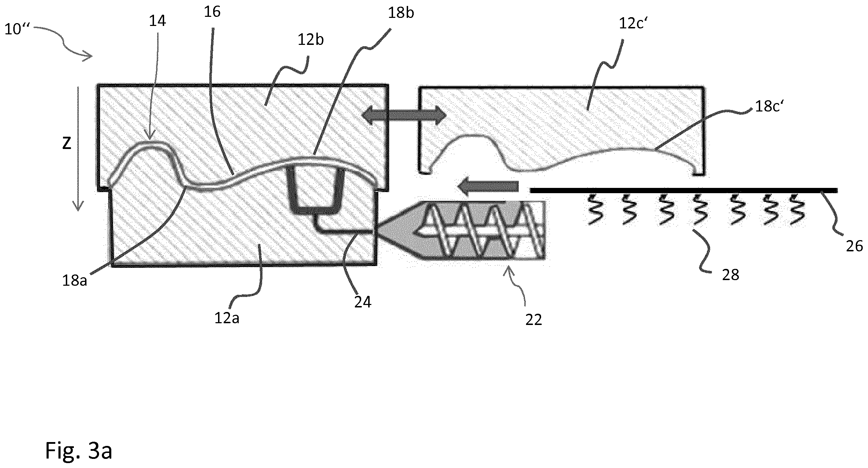

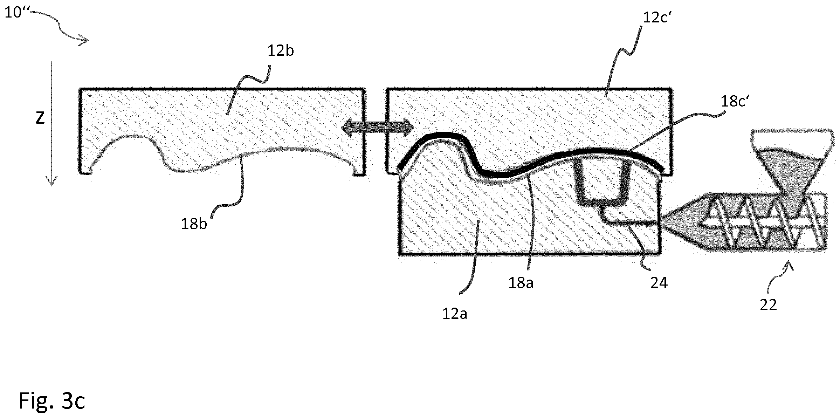

Eine dritte Ausführungsform eines Verfahrens zum Herstellen eines kaschierten Formteils wird nachfolgend unter Bezugnahme auf die Figuren 3a bis 3b beschrieben.

Die dritte Ausführungsform gleicht weitgehend der zweiten Ausführungsform und umfasst eine Pressformwerkzeugeinrichtung 10" mit einer Wechseleinrichtung zum Austausch der zweiten Formwerkzeugeinheit 12b gegen eine dritte Formwerkzeugeinheit 12c'. Die dritte

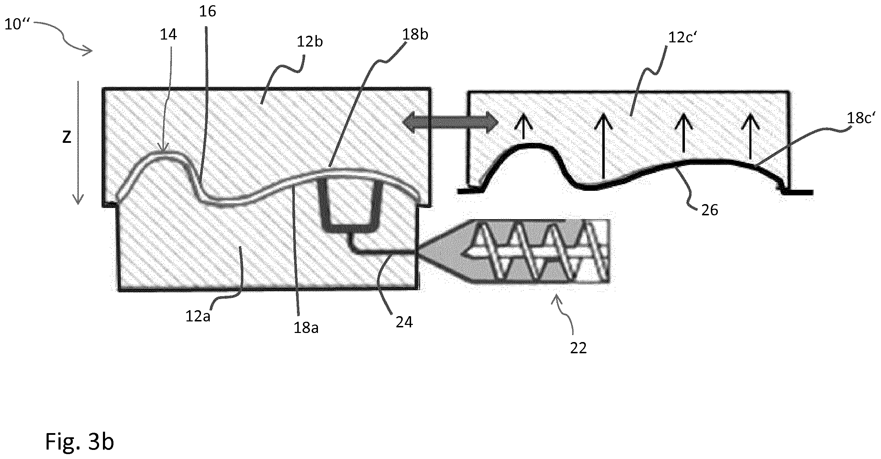

Formwerkzeugeinheit 12c' entspricht in Funktion und Ausgestaltung im Wesentlichen der vorangehend mit Bezug auf das zweite Ausführungsbeispiel beschriebenen dritten Formwerkzeugeinheit 12c. Sie umfasst jedoch zusätzlich eine Ansaugvorrichtung zum Ansaugen des Kaschierelements 26. Beispielsweise kann die dritte Formwerkzeugeinheit 12c' an ihrer unteren dritten Oberfläche 18c' mit einer Vielzahl von Öffnungen versehen sein, welche über innerhalb der dritten Formwerkzeugeinheit 12c' verlaufende Kanäle mit einer Vakuumquelle (nicht gezeigt) verbunden sind. Durch Anlegen eines Unterdrucks mittels der Vakuumquelle kann das Kaschierelement 26 an die dritte Oberfläche 18c' angesaugt und tiefgezogen werden, sodass sie in ihrer Form der Formgebung und Struktur der dritten Oberfläche 18c'entspricht. Fig. 3b zeigt das an der dritten Oberfläche 18c' tiefgezogene Kaschierelement 26.

Das Tiefziehen gewährleistet zum einen eine präzise und reproduzierbare Positionierung des Kaschierelements 26 in dem Formraum 14. Zudem ermöglicht es diese Ausführungsform, das Kaschierelement 26 zusammen mit der dritten Formwerkzeugeinheit 12c' in den Formraum 14 einzuführen, wie in Fig. 3b schematisch gezeigt ist. In dieser Ausführungsform umfasst die Einführeinrichtung zum Einführen des Kaschierelements die dritte Formwerkzeugeinheit 12c'. Auf eine separate Einführeinrichtung für das Kaschierelement 26 kann verzichtet werden.

Von diesen Unterschieden abgesehen, erfolgt das Herstellen des kaschierten Formteils gemäß dem Ausführungsbeispiel der Figuren 3a bis 3b vollständig entsprechend dem vorangehend unter Bezugnahme auf die Figuren 2a bis 2c beschriebenen zweiten Ausführungsbeispiel.

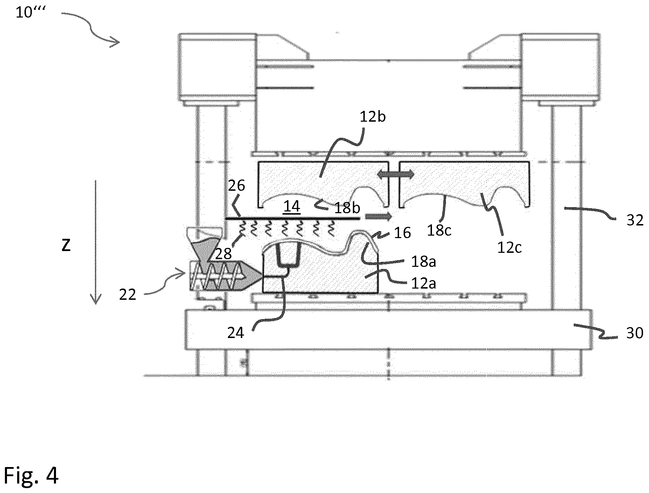

Fig. 4 zeigt ein Ausführungsbeispiel einer Pressformwerkzeugeinrichtung 10''' in weiteren Einzelheiten. Die Pressformwerkzeugeinrichtung 10''' umfasst ein Basiselement 30, auf welchem die erste Formwerkzeugeinheit 12a gelagert ist. Das Basiselement 30 lagert auch die Spritzgusseinheit 22, welche über in der ersten Formwerkzeugeinheit 12a ausgebildete Spritzgusskanäle 24 ein Kunststoffspritzmittel in den Formraum 14 einspritzen kann, wie vorangehend unter Bezugnahme auf das erste Ausführungsbeispiel beschrieben wurde.

Die Pressformwerkzeugeinrichtung 10''' umfasst ferner eine Portaleinrichtung 32, an welcher die zweite Formwerkzeugeinheit 12b beweglich gelagert ist. Die Portaleinrichtung 32 ermöglicht ein Absenken der zweiten Formwerkzeugeinheit 12b entlang de Richtung z gegen die erste Formwerkzeugeinheit 12a zum Pressformen und nachfolgenden Presskaschieren, wie vorangehend unter Bezugnahme auf das erste bis dritte Ausführungsbeispiel in weiteren Einzelheiten beschrieben wurde. Die Portaleinrichtung 32 ermöglicht auch den Wechsel der zweiten Formwerkzeugeinheit 12b gegen die dritte Formwerkzeugeinrichtung 12c, sodass das Pressformen und nachfolgende Presskaschieren mit unterschiedlichen Formwerkzeugen erfolgen können, wie vorangehend unter Bezugnahme auf das zweite Ausführungsbeispiel in weiteren Einzelheiten erläutert wurde.

Die Ausführungsbeispiele und die Zeichnungen dienen allein der Erläuterung der Erfindung und der mit ihr verbundenen Vorteile, sollen die Erfindung allerdings nicht beschränken. Der Umfang der Erfindung ergibt sich allein aus den nachfolgenden Ansprüchen.

### Bezugszeichen

- 10, 10', 10", 10''': Pressformwerkzeugeinrichtung
- 12a: erste Formwerkzeugeinheit
- 12b: zweite Formwerkzeugeinheit
- 12c, 12c': dritte Formwerkzeugeinheit
- 14: Formraum, Werkzeugspalt
- 16: Formteil
- 18a: erste Oberfläche der ersten Formwerkzeugeinheit 12a
- 18b: zweite Oberfläche der zweiten Formwerkzeugeinheit 12b
- 18c, 18c': dritte Oberfläche der dritten Formwerkzeugeinheit 12c
- 20: bewegliches Anschlagelement
- 22: Spritzgusseinheit
- 24: Spritzgusskanäle
- 26: Kaschierelement
- 28: Klebemittel
- 30: Basiselement
- 32: Portaleinrichtung

## Patentansprüche

1. Verfahren zum Herstellen eines kaschierten Formteils mit folgenden Schritten:
Pressformen eines Rohlings zu einem Formteil (16) in einem Formraum (14) zwischen einer ersten Formwerkzeugeinheit (12a) und einer zweiten Formwerkzeugeinheit (12b);
Einführen eines Kaschierelements (26) in den Formraum (14) nach dem Pressformen des Rohlings; und
Verbinden des Formteils (16) mit dem Kaschierelement (26) in dem Formraum (14);
**dadurch gekennzeichnet, dass** das Verbinden des Formteils (16) mit dem Kaschierelement (26) ein Presskaschieren des Formteils (16) mit dem Kaschierelement (26) zwischen der ersten Formwerkzeugeinheit (12a) und einer dritten Formwerkzeugeinheit (12c, 12c'), welche von der zweiten Formwerkzeugeinheit (12b) verschieden ist, umfasst.

2. Verfahren nach Anspruch 1, bei welchem das Formteil (16) zwischen dem Pressformen und dem Einführen des Kaschierelements (26) und dem Verbinden des Formteils (16) mit dem Kaschierelement (26) in dem Formraum (14) verbleibt, vorzugsweise an der ersten Formwerkzeugeinheit (12a) anliegend in dem Formraum (14) verbleibt.

3. Verfahren nach einem der vorangehenden Ansprüche mit einem Schritt eines Entfernens der zweiten Formwerkzeugeinheit (12b) aus dem Formraum (14) und/oder mit einem Schritt eines Einführens der dritten Formwerkzeugeinheit (12c, 12c') in den Formraum (14), so dass die dritte Formwerkzeugeinheit (12c, 12c') der erstenFormwerkzeugeinheit (12a) gegenüberliegt.

4. Verfahren nach Anspruch 3, bei welchem das Kaschierelement (26) vor dem Presskaschieren an der dritten Formwerkzeugeinheit (12c, 12c') in den Formraum (14) eingeführt wird.

5. Verfahren nach einem der vorangehenden Ansprüche mit einem Schritt eines Anlegens des Kaschierelements (26) an die dritte (12c, 12c') Formwerkzeugeinheit vor dem Verbinden des Formteils (16) mit dem Kaschierelement (26), insbesondere mit einem Schritt eines Ansaugens des Kaschierelements (26) an die dritte (12c, 12c') Formwerkzeugeinheit.

6. Verfahren nach einem der vorangehenden Ansprüche, bei welchem der Rohling ein vorgewärmter Rohling ist.

7. Verfahren nach einem der vorangehenden Ansprüche mit einem Schritt eines Erwärmens des Kaschierelements (26) vor dem Verbinden des Formteils (16) mit dem Kaschierelement (26).

8. Verfahren nach einem der vorangehenden Ansprüche mit einem Schritt eines Anspritzens von Verstärkungselementen an das Formteil (16) in dem Formraum (14).

9. Vorrichtung zum Herstellen eines kaschierten Formteils mit:
einer Pressformwerkzeugeinrichtung (10, 10', 10", 10'''), welche eine erste Formwerkzeugeinheit (12a) und eine zweite Formwerkzeugeinheit (12b) und einen Formraum (14) umfasst, wobei die erste Formwerkzeugeinheit (12a) und die zweite Formwerkzeugeinheit (12b) zum Pressformen eines Rohlings zu einem Formteil (16) relativ zueinander in dem Formraum (14) verschiebbar sind; und
einer ersten Einführeinrichtung (12c') zum Einführen eines Kaschierelements (26) in den Formraum (14) nach dem Pressformen des Formteils (16);
wobei die Vorrichtung dazu eingerichtet ist, das Formteil (16) mit dem Kaschierelement (26) in dem Formraum (14) zu verbinden;
**dadurch gekennzeichnet, dass** die Pressformwerkzeugeinrichtung (10', 10", 10''') eine dritte Formwerkzeugeinheit (12c, 12c') umfasst, wobei die dritte Formwerkzeugeinheit (12c, 12c') und die erste Formwerkzeugeinheit (12a) relativ zueinander in dem Formraum (14) verschiebbar sind, wobei die Pressformwerkzeugeinrichtung (10', 10", 10''') dazu eingerichtet ist, das Formteil (16) mit dem Kaschierelement (26) in dem Formraum (14) zwischen der ersten Formwerkzeugeinheit (12a) und der dritten Formwerkzeugeinheit (12c, 12c') presszukaschieren.

10. Vorrichtung nach Anspruch 9, wobei die Pressformwerkzeugeinrichtung (10', 10", 10"') dazu eingerichtet ist, die zweite Formwerkzeugeinheit (12b) aus dem Formraum (14) zu entfernen und/oder die dritte Formwerkzeugeinheit (12c, 12c') in den Formraum (14) einzuführen.

11. Vorrichtung nach Anspruch 9 oder 10, bei welcher die dritte (12c') Formwerkzeugeinheit dazu eingerichtet ist, das Kaschierelement (26) vor dem Verbinden des Formteils (16) mit dem Kaschierelement (26) an die dritte (12c') Formwerkzeugeinheit anzulegen, insbesondere tiefzuziehen und vorzugsweise anzusaugen.

12. Vorrichtung nach einem der Ansprüche 9 bis 11 mit einer zweiten Einführeinrichtung zum Einführen des Rohlings in den Formraum (14).

13. Vorrichtung nach einem der Ansprüche 9 bis 12 mit einer Heizeinrichtung zum Erwärmen des Rohlings und/oder zum Erwärmen des Kaschierelements (26) vor dem Verbinden des Formteils (16) mit dem Kaschierelement (26).

14. Vorrichtung nach einem der Ansprüche 9 bis 13,wobei die Pressformwerkzeugeinrichtung (10, 10', 10", 10''') dazu eingerichtet ist, an das Formteil (16) in dem Formraum (14) Verstärkungselemente anzuspritzen.

15. Steuerungsprogramm mit rechnerlesbaren Instruktionen, welche dazu eingerichtet sind, mit einer Vorrichtung gemäß einem der Ansprüche 9 bis 14 bei einem Abarbeiten der rechnerlesbaren Instruktionen in einer Rechnervorrichtung die Verfahrensschritte nach einem der Ansprüche 1 bis 8 auszuführen.

## Claims

1. A method for producing a laminated moulded part with the following steps:
pressure moulding a blank to form a moulded part (16) in a moulding cavity (14) between a first moulding tool unit (12a) and a second moulding tool unit (12b);
introducing a laminating element (26) into the moulding cavity (14) after the pressure moulding of the blank; and
bonding the moulded part (16) with the laminating element (26) in the moulding cavity (14);
**characterised in that**,
the bonding of the moulded part (16) with the laminating element (26) comprises a pressure lamination of the moulded part (16) with the laminating element (26) between the first moulding tool unit (12a) and a third moulding tool unit (12c, 12c'), which differs from the second moulding tool unit (12b).

2. The method in accordance with claim 1,
wherein the moulded part (16) remains in the moulding cavity (14) between the pressure moulding, and the introducing of the laminating element (26), and the bonding of the moulded part (16) with the laminating element (26), preferably attached to the first moulding tool unit (12a) in the moulding cavity (14).

3. The method in accordance with one of the preceding claims,
with a step of removing the second moulding tool unit (12b) from the moulding cavity (14) and/or with a step of introducing the third moulding tool unit (12c, 12c') into the moulding cavity (14), so that the third moulding tool unit (12c, 12c') faces the first moulding tool unit (12a).

4. The method according to claim 3, wherein before the pressure lamination the laminating element (26) is introduced into the moulding cavity (14) on the third moulding tool unit (12c, 12c').

5. The method in accordance with one of the preceding claims, further comprising a step of attaching the laminating element (26) to the third moulding tool unit (12c, 12c') before the bonding of the moulded part (16) with the laminating element (26), in particular comprising a step of sucking the laminating element (26) onto the third moulding tool unit (12c, 12c').

6. The method in accordance with one of the preceding claims,
wherein the blank is a preheated blank.

7. The method in accordance with one of the preceding claims,
with a step of preheating the laminating element (26) before the bonding of the moulded part (16) with the laminating element (26).

8. The method in accordance with one of the preceding claims,
with a step of injecting reinforcing elements onto the moulded part (16) in the moulding cavity (14).

9. A device for producing a laminated moulded part with:
a pressure moulding tool device (10, 10', 10", 10'''), which comprises a first moulding tool unit (12a) and a second moulding tool unit (12b) and a moulding cavity (14), wherein
the first moulding tool unit (12a) and the second moulding tool unit (12b) are displaceable relative to one another in the moulding cavity (14) for pressure moulding a blank to form a moulded part (16), and
a first insertion device (12c') for introducing a laminating element(26) into the moulding cavity (14) after the pressure moulding of the blank (16); wherein
the device is adapted for bonding the moulded part (16) with the laminating element (26) in the moulding cavity (14);
**characterised in that**,
the pressure moulding tool device (10, 10', 10", 10''') comprises a third moulding tool unit (12c, 12c'), wherein
the third moulding tool unit (12c, 12c') and the first moulding tool unit (12a) are displaceable relative to one another in the moulding cavity (14), wherein
the pressure moulding tool device (10, 10', 10", 10''') is adapted for pressure laminating the moulded part (16) with the laminating element (26) in the moulding cavity (14) between the first moulding tool unit (12a) and the third moulding tool unit (12c, 12c').

10. The device in accordance with claim 9,
wherein the pressure moulding tool device (10', 10", 10''') is adapted for removing the second moulding tool unit (12b) from the moulding cavity (14) and/or introducing the third moulding tool unit (12c, 12c') into the moulding cavity (14).

11. The device in accordance with claim 9 or 10, wherein
the third moulding tool unit (12c, 12c') is adapted for attaching the laminating element (26) onto the third moulding tool unit (12c') before the bonding of the moulded part (16) with the laminating element (26), in particular for deep-drawing the laminating element (26) onto the third moulding tool unit (12c'), and preferably for sucking the laminating element (26) onto the third moulding tool unit (12c').

12. The device in accordance with one of the claims 9 to 11,
with a second insertion device for introducing the blank into the moulding cavity (14).

13. The device in accordance with one of the claims 9 to 12,
with a heating device for heating the blank and/or for heating the laminating element (26) before the bonding of the moulded part (16) with the laminating film (26).

14. The device in accordance with one of the claims 9 to 13,
wherein the pressure moulding tool device (10, 10', 10", 10''') is adapted for injecting reinforcing elements onto the moulded part (16) in the moulding cavity (14).

15. A control program with computer-readable instructions, which are adapted to execute the method steps of any one of claims 1 to 8with the device according to any one of claims 9 to 14 when processing the computer-readable instructions in a computer device.

## Revendications

1. Procédé de fabrication d'une pièce formée contrecollée, avec les étapes suivantes :
formage à la presse d'une ébauche pour obtenir une pièce formée (16) dans un espace de formage (14) entre une première unité d'outil de formage (12a) et une deuxième unité d'outil de formage (12b) ;
introduction d'un élément de contrecollage (26) dans l'espace de formage (14) après le formage à la presse de l'ébauche ; et
raccordement de la pièce formée (16) à l'élément de contrecollage (26) dans l'espace de formage (14) ;
**caractérisé en ce que**
le raccordement de la pièce formée (16) à l'élément de contrecollage (26) comprend un contrecollage à la presse de la pièce formée (16) avec l'élément de contrecollage (26) entre la première unité d'outil de formage (12a) et une troisième unité d'outil de formage (12c, 12c') qui est différente de la deuxième unité d'outil de formage (12b) ;

2. Procédé selon la revendication 1,
dans lequel la pièce formée (16) demeure dans l'espace de formage (14) entre le formage à la presse, et l'introduction de l'élément de contrecollage (26), et le raccordement de la pièce formée (16) à l'élément de contrecollage (26), de préférence attachée à la première unité d'outil de formage (12a) dans l'espace de formage (14).

3. Procédé selon l'une des revendications précédentes,
avec une étape d'enlèvement de la deuxième unité d'outil de formage (12b) à partir de l'espace de formage (14) et/ou avec une étape d'introduction de la troisième unité d'outil de formage (12c, 12c') dans l'espace de formage (14) de telle sorte que la troisième unité d'outil de formage (12c, 12c') est en face de la première unité d'outil de formage (12a).

4. Procédé selon la revendication 3, dans lequel, avant le contrecollage à la presse, l'élément de contrecollage (26) est introduit dans l'espace de formage (14) sur la troisième unité d'outil de formage (12c, 12c').

5. Procédé selon l'une des revendications précédentes,
comprenant en outre une étape d'attachement de l'élément de contrecollage (26) à la troisième unité d'outil de formage (12c, 12c') avant le raccordement de la pièce formée (16) à l'élément de contrecollage (26), en particulier comprenant une étape d'aspiration de l'élément de contrecollage (26) sur la troisième unité d'outil de formage (12c, 12c').

6. Procédé selon l'une des revendications précédentes,
dans lequel l'ébauche est une ébauche préchauffée.

7. Procédé selon l'une des revendications précédentes,
avec une étape de préchauffage de l'élément de contrecollage (26) avant le raccordement de la pièce formée (16) à l'élément de contrecollage (26).

8. Procédé selon l'une des revendications précédentes,
avec une étape d'injection d'éléments de renforcement sur la pièce formée (16) dans l'espace de formage (14).

9. Dispositif destiné à la fabrication d'une pièce formée contrecollée, avec :
un dispositif d'outil de formage à la presse (10, 10', 10", 10''') qui comprend une première unité d'outil de formage (12a) et une deuxième unité d'outil de formage (12b) et un espace de formage (14), dans lequel,
pour le formage à la presse d'une ébauche pour obtenir une pièce formée (16), la première unité d'outil de formage (12a) et la deuxième unité d'outil de formage (12b) sont déplaçables relativement l'une à l'autre dans l'espace de formage (14) ; et
avec un premier dispositif d'insertion (12c') pour l'introduction d'un élément de contrecollage (26) dans l'espace de formage (14) après le formage à la presse de l'ébauche (16) ; dans lequel le dispositif est agencé pour raccorder la pièce formée (16) à l'élément de contrecollage (26) dans l'espace de formage (14) ;
**caractérisé en ce que**
le dispositif d'outil de formage à la presse (10, 10', 10", 10''') comprend une troisième unité d'outil de formage (12c, 12c'), dans lequel
la troisième unité d'outil de formage (12c, 12c') et la première unité d'outil de formage (12a) sont déplaçables relativement l'une à l'autre dans l'espace de formage (14), dans lequel
le dispositif d'outil de formage à la presse (10, 10', 10", 10''') est adapté pour contrecoller à la presse la pièce formée (16) avec l'élément de contrecollage (26) dans l'espace de formage (14) entre la première unité d'outil de formage (12a) et la troisième unité d'outil de formage (12c, 12c').

10. Dispositif selon la revendication 9,
dans lequel le dispositif d'outil de formage à la presse (10',10", 10''') est adapté pour enlever la deuxième unité d'outil de formage (12b) à partir de l'espace de formage (14) et/ou pour introduire la troisième unité d'outil de formage (12c, 12c') dans l'espace de formage (14).

11. Dispositif selon la revendication 9 ou 10, dans lequel
la troisième unité d'outil de formage (12c, 12c') est adaptée pour attacher l'élément de contrecollage (26) à la troisième unité d'outil de formage (12c') avant le raccordement de la pièce formée (16) à l'élément de contrecollage (26), en particulier pour l'emboutissage profond de l'élément de contrecollage (26) sur la troisième unité d'outil de formage (12c'), et de préférence pour aspirer l'élément de contrecollage (26) sur la troisième unité d'outil de formage (12c').

12. Dispositif selon l'une des revendications 9 à 11,
avec un deuxième dispositif d'insertion pour l'introduction de l'ébauche dans l'espace de formage (14).

13. Dispositif selon l'une des revendications 9 à 12,
avec un dispositif de chauffage pour le chauffage de l'ébauche et/ou pour le chauffage de l'élément de contrecollage (26) avant le raccordement de la pièce formée (16) à l'élément de contrecollage (26).

14. Dispositif selon l'une des revendications 9 à 13,
dans lequel le dispositif d'outil de formage à la presse (10, 10', 10", 10''') est adapté pour injecter des éléments de renforcement sur la pièce formée (16) dans l'espace de formage (14).

15. Programme de commande avec des instructions lisibles par ordinateur qui sont adaptées pour exécuter les étapes de procédé selon l'une quelconque des revendication 1 à 8 avec le dispositif selon l'une quelconque des revendications 9 à 14 lors du traitement des instructions lisibles par ordinateur dans un dispositif d'ordinateur.
